# EUROPÄISCHE PATENTSCHRIFT

(11) **EP 1 712 381 B1**
(45) Veröffentlichungstag und Bekanntmachung des Hinweises auf die Patenterteilung: **10.10.2007**
(21) Anmeldenummer: 05008278.3
(22) Anmeldetag: 15.04.2005
(51) Int. Cl.: B60G 21/02, B60G 5/02, B60G 17/015, B60K 17/36

(54) **Vorrichtung und Verfahren zur stufenlosen Regulierung des Aufstellens einer Tandemachse**
Device and method for stepless regulation of the position of a tandem axle
Dispositif et procédé pour le réglage continu de la position d'un essieu tandem

(43) Veröffentlichungstag der Anmeldung: 18.10.2006
(73) Patentinhaber: NAF Neunkirchener Achsenfabrik AG, 91077 Neunkirchen (DE)
(72) Erfinder: Auer, Ernst, 81245 München (DE)
(74) Vertreter: Hofstetter, Alfons J.

(56) Entgegenhaltungen:
- EP-A- 1 422 080
- WO-A-98/45132
- DE-A1- 19 908 957
- US-A- 4 152 000
- US-A- 5 339 611
- US-B1- 6 279 931

## Beschreibung

Die vorliegende Erfindung betrifft eine Vorrichtung zur stufenlosen Regulierung des Aufstellens einer Antriebstandemachse eines Fahrzeuges oder einer selbstfahrenden Arbeitsmaschine, die einen Fahrzeugrahmen und mindestens eine Antriebsachse aufweist, wobei jeweils an den Enden der Antriebsachse eine Antriebstandemachse mit einem beweglichen Tandemachsengehäuse angeordnet ist und über die Antriebstandemachse das von der Antriebsachse eingeleitete Moment mechanisch auf die in dem Tandemachsengehäuse angeordneten Räder verteilt wird. Die Erfindung betrifft weiterhin ein Verfahren zur stufenlosen Regulierung des Aufstellens einer Tandemachse eines Fahrzeuges oder einer selbstfahrenden Arbeitsmaschine.

Derartige Vorrichtungen zur Regulierung des Aufstellens einer Antriebstandemachse eines Fahrzeuges oder einer selbstfahrenden Arbeitsmaschine sind bekannt. Tandemachsen oder auch Boogieachsen haben den Nachteil, dass sich die Achsenschwinge unabhängig von Übersetzungsverhältnissen und den geometrischen Verhältnissen mehr oder weniger aufrichtet, wenn ein Drehmoment eingeleitet wird. Dadurch ergibt sich eine ungleichmäßige Verteilung der Radlast zwischen den Vorder- und Hinterrädern, die an den jeweiligen Enden der Achsschwingen angeordnet sind. Dadurch kommt es vor, dass zumindest eines der Räder die Bodenhaftung verliert bzw. der Bodendruck stark reduziert wird. Da die beschriebenen Tandemachsen hauptsächlich in Forstmaschinen, Muldenkippern und Gradern zum Einsatz kommen, die insbesondere in unwegsamen Gelände operieren, führt dies zu deutlichen Einschränkungen während des Betriebs der entsprechenden Fahrzeuge und zu unterschiedlichem Reifenverschleiß.

Um den genannten Aufstelleffekt zu verhindern, wird bei bekannten Vorrichtungen in der Achsschwinge eine Übersetzung von 1:1 oder von nahezu 1:1 verwendet. Nachteilig hierbei ist jedoch, dass die Komponenten innerhalb der Achsschwinge ein hohes Drehmoment übertragen müssen und daher entsprechend großzügig dimensioniert werden. Derartige Achsschwingen werden daher sehr teuer, schwer und verlieren an Bodenfreiheit. Weitere bekannte Vorrichtungen zur Verhinderung eines Aufstelleffekts einer Tandemachse verwenden ein Doppelplanetengetriebe oder ein Messgetriebe und nutzen dessen Rückdrehmoment um den Aufstelleffekt zu reduzieren. Entsprechende Vorrichtungen sind der DE-A1-19802371 und in der DE-A1-4120801 beschrieben. Nachteilig an diesen Vorrichtungen ist jedoch, dass das Rückdrehmoment sich nicht in seiner Größe justieren lässt und immer proportional zum Eingangsmoment ist. Ein Aufstelleffekt, der in manchen Fahrsituationen auch wünschenswert sein kann, lässt sich nicht herbeiführen. Das Vorder- bzw. Hinterrad der Tandemachse lässt sich durch diesen Mechanismus nicht gewollt anheben.

Eine weitere aus dem Stand der Technik bekannte Vorrichtung ist in der DE-A1-19616405 beschrieben. Diese Vorrichtung verwendet Hydraulikzylinder, die außen zwischen einem Tandemkasten und dem Fahrzeugrahmen angebracht werden und mit einem Druck beaufschlagt werden, der proportional zum Betriebsdruck eines antreibenden Hydromotors geschaltet wird. Nachteilig hierbei ist jedoch, dass die außenliegenden Hydraulikzylinder anfällig sind, da sie den Umwelteinflüssen ausgesetzt sind. Zudem ist die Installation zwischen Fahrzeugrahmen und Tandemschwinge aufwendig und schränkt die unabhängige Bewegungsfreiheit der Tandemachse ein. Eine unterschiedliche Steuerung der linken und rechten Seite ist nicht möglich.

Schließlich beschreibt die DE-U1-20217910 eine Vorrichtung zur Regulierung des Aufstellens einer Tandemachse, wobei ein Gehäuse eines mit Druck beaufschlagbaren Drehkolbenzylinders fest mit einem Achsgehäuse einer Antriebsachse verbunden ist und ein beweglicher Kolben des Drehkolbenzylinders ein nachgeschaltetes Planetengetriebe mit einer Planetenachse und Planetenrädern antreibt, wobei die Planetenachse des Planetengetriebes fest mit dem Achsgehäuse oder dem Gehäuse des Drehkolbenzylinders verbunden ist und die Planetenräder auf einen Zahnkranz, der mit einem Tandemachsengehäuse verbunden ist, einwirken. Durch die Zwischenschaltung eines Drehkolbenzylinders und des dem Drehkolbenzylinder nachgeschalteten Planetengetriebes ist es möglich, einen vordefinierten Druck auf das Tandemachsengehäuse auszuüben und entweder einem Aufstelleffekt der Tandemachse entgegenzuwirken oder ein aktives Anheben der Tandemachse durchzuführen. Dabei wird die Drehrichtung des Drehkolbens bei Druckeinleitung durch das Planetengetriebe umgekehrt, so dass auf das Tandemachsengehäuse entsprechende Gegenmomente wirken. Nachteilig an dieser Vorrichtung ist jedoch, dass auch hierbei der vordefinierte und steuerbare Druck immer in einem starren Verhältnis zu einem theoretisch auftretenden Aufstellmoments ist. Eine separate Regulierung des Aufstelleffekts der einzelnen Tandemachsen unter Berücksichtigung der jeweils auftretenden aktuellen Drehmomente ist nicht möglich.

Es ist daher Aufgabe der vorliegenden Erfindung, eine Vorrichtung und ein Verfahren zur stufenlosen Regulierung des Aufstellens einer Tandemachse eines Fahrzeuges oder einer selbstfahrenden Arbeitsmaschine bereitzustellen, die einerseits zuverlässig das ungewollte Aufstellen der Tandemachse in einem vorbestimmbaren Maße verhindert und andererseits eine separate Regulierung des Aufstelleffekts der einzelnen Tandemachsen unter Berücksichtigung der jeweils auftretenden aktuellen Drehmomente ermöglicht und weiterhin ein vollständiges eines Rades unabhängig vom Drehmoment ermöglichen.

Gelöst wird diese Aufgabe durch eine Vorrichtung und ein Verfahren zur stufenlosen Regulierung des Aufstellens einer Tandemachse mit den Merkmalen der unabhängigen Ansprüche 1 und 11.

Vorteilhafte Ausgestaltungen sind in den jeweiligen Unteransprüchen beschrieben.

Bei einer erfindungsgemäßen Vorrichtung zur Regulierung des Aufstellens einer Tandemachse eines Fahrzeuges oder einer selbstfahrenden Arbeitsmaschine ist eine Antriebsachse mit einer Antriebstandemachse über eine Kugelrampenvorrichtung koaxial verbunden, wobei die Kugelrampenvorrichtung aus einer ersten Kugelrampenscheibe, die mit einem Ende der Antriebstandemachse, welches einem Ende der Antriebsachse gegenüberliegt, verbunden ist, und einer zweiten Kugelrampenscheibe, die am Ende der Antriebstandemachse axial verschiebbar angeordnet ist, besteht. Durch ein dem Antriebsdrehmoment entgegenwirkendes Drehmoment der Antriebstandemachse wird der Abstand L zwischen der zweiten Kugelrampenscheibe und der ersten Kugelrampenscheibe vergrößert, wobei die zweite Kugelrampenscheibe mit einem Kolben in Wirkverbindung steht und durch die Axialbewegung der zweiten Kugelrampenscheibe ein Druck mit einem Wert P1 in einem Volumen erzeugt wird, wobei P1 an ein Regelventil geleitet wird und das Regelventil die Höhe eines Systemdrucks P3 oder P4 in Abhängigkeit von P1 regelt und dieser resultierendende Druck mit dem Wert P2 zur Steuerung einer Ausgleichsvorrichtung zur Erzielung eines dem Aufstelleffekt entgegenwirkenden Ausgleichsmoments dient. Das Regelventil ist dabei üblicherweise mit einem Hydraulikkreislauf einer Hydropumpe des Fahrzeuges oder der selbstfahrenden Arbeitsmaschine verbunden. Es ist aber auch denkbar, dass ein eigener, separater Hydraulikkreislauf zur Steuerung der Ausgleichsvorrichtung dient. Durch die Messung des dem Antriebsdrehmoment entgegenwirkenden Drehmoments der Antriebstandemachse über die Kugelrampenvorrichtung, d.h. die Überführung eines Drehmoments in eine axiale Bewegung und die Erzeugung eines Steuerdrucks P1, ist es möglich, zuverlässig das ungewollte Aufstellen der Tandemachse in einem vorbestimmbaren Maße zu verhindern und zudem eine separate Regulierung des Aufstelleffekts der einzelnen Tandemachsen unter Berücksichtigung der jeweils auftretenden aktuellen und tatsächlichen Drehmomente zu ermöglichen. Der resultierende Druck P2, der zur Steuerung der Ausgleichsvorrichtung dient, steht dabei in direkter Abhängigkeit (proportional) von dem gemessenen Druck P1.

In einer vorteilhaften Ausgestaltung der Erfindung ist das Regelventil ein regelbares oder nicht-regelbares Proportionalventil. Dadurch ist es möglich, die Höhe des vom Hydrauliksystem in das Regelventil eingeleiteten Drucks je nach Anforderung voreinzustellen. Diese Einstellung kann dabei einmalig oder kontinuierlich erfolgen.

In einer weiteren vorteilhaften Ausgestaltung der Erfindung ist im Hydraulikkreislauf dem Regelventil mindestens eine Regel- und Einstellvorrichtung zur manuellen Voreinstellung der relativen Höhe des Ausgleichsmoments zur Regulierung des Aufstelleffekts der Tandemachse vorgeschaltet. Üblicherweise ist die Regel- und Einstellvorrichtung ein Druckminderventil. Durch die Regel- und Einstellvorrichtung ist es möglich, dass je nach Fahrsituation ein Ausgleichsmoment zwischen 0 und 100 % eingestellt werden kann. Dabei bedeuten 100 % Ausgleich eine gleiche Radlast auf das Vorder- und Hinterrad in jeder Fahrsituation. 0 % Ausgleich bedeuten keinen Ausgleich, also einen Aufstelleffekt in voller Höhe, wodurch eine Situation ohne die erfindungsgemäße Vorrichtung simuliert wird. Die Höhe des Ausgleichseffekts zur Regulierung des Aufstellens der Tandemachse ist dabei mit der Regel- und Einstellvorrichtung manuell oder automatisch einstellbar.

In einer weiteren vorteilhaften Ausgestaltung der Erfindung ist die Ausgleichsvorrichtung eine Drehkolbenzylinderanordnung, wobei ein Gehäuse eines mit Druck beaufschlagbaren Drehkolbenzylinders fest mit einem Achsgehäuse der Antriebsachse verbunden ist und ein beweglicher Kolben des Drehkolbenzylinders ein nachgeschaltetes Planetengetriebe mit einer Planetenachse und Planetenrädern antreibt, wobei die Planetenachse des Planetengetriebes fest mit dem Achsgehäuse oder dem Gehäuse des Drehkolbenzylinders verbunden ist und die Planetenräder auf einen Zahnkranz, der mit dem Tandemachsengehäuse verbunden ist, einwirken. Durch die Zwischenschaltung eines Drehkolbenzylinders und des dem Drehkolbenzylinder nachgeschalteten Planetengetriebes ist es möglich, den eingeleiteten Druck P2 auf das Tandemachsengehäuse auszuüben. Dabei wird die Drehrichtung des Drehkolbens bei Druckeinleitung durch das Planetengetriebe umgekehrt, so dass auf das Tandemachsengehäuse entsprechende Gegenmomente wirken.

In einer weiteren vorteilhaften Ausgestaltung der Erfindung ist die Ausgleichsvorrichtung eine Zahnstangen-Drehzylinder-Vorrichtung mit angeschlossenem Planetengetriebe zur Einleitung des Drehmoments des Ausgleichseffekts in die Tandemachse.

In einer weiteren vorteilhaften Ausgestaltung der Erfindung besteht die Ausgleichsvorrichtung aus zwei außen liegenden Zylindern, wobei die Zylinder ebenfalls mit einem Ende an dem Tandemachsengehäuse und mit dem anderen Ende an einem Fahrgestell des Fahrzeugs oder der selbstfahrenden Arbeitsmaschine befestigt sind.

Ein erfindungsgemäßes Verfahren zur Regulierung des Aufstellens einer Tandemachse eines Fahrzeuges oder einer selbstfahrenden Arbeitsmaschine umfasst folgende Schritte: (a) Einleiten eines Antriebsmoments über eine Antriebsachse und eine koaxiale Antriebstandemachse und Verteilung des eingeleiteten Moments mechanisch auf die in einem Tandemachsengehäuse angeordneten Räder, wobei die Antriebsachse mit der Antriebstandemachse über eine Kugelrampenvorrichtung verbunden ist und die Kugelrampenvorrichtung aus einer ersten Kugelrampenscheibe, die mit einem Ende der Antriebstandemachse, welches einem Ende der Antriebsachse gegenüberliegt, verbunden ist und einer zweiten Kugelrampenscheibe, die am Ende der Antriebsachse axial verschiebbar angeordnet ist, besteht; (b) Messen eines dem Antriebsdrehmoment entgegenwirkenden Drehmoments der Antriebstandemachse mittels eines von einem Kolben erzeugten Drucks mit einem Wert P1, wobei der Kolben mit der zweiten Kugelrampenscheibe in Wirkverbindung steht; (c) Weiterleiten des Drucks P1 an ein Regelventil; und (d) Regelung der Höhe des Systemdrucks P3 oder P4 in Abhängigkeit von P1 und Einleiten des resultierenden Drucks mit einem Wert P2 in eine Ausgleichsvorrichtung zur Erzielung eines dem Aufstelleffekt entgegenwirkenden Ausgleichmoments. Durch das erfindungsgemäße Verfahren ist es möglich, einerseits das ungewollte Aufstellen der Tandemachse zuverlässig in einem vorbestimmbaren Maße zu verändern und andererseits eine separate Regulierung des Aufstelleffekts der einzelnen Tandemachsen unter Berücksichtigung der jeweils auftretenden Drehmomente zu ermöglichen. Durch die Messung des aktuell auftretenden und dem Antriebsdrehmoment entgegengerichteten Drehmoments des sogenannten Aufstelleffekts über die Kugelrampenvorrichtung und dem damit in Wirkverbindung stehenden Kolben unter Erzeugung eines Steuerdrucks P1 ist eine kontinuierliche Vermittlung und Überwachung des tatsächlichen Aufstelleffekts und dessen Ausgleich möglich.

In einer vorteilhaften Ausgestaltung des erfindungsgemäßen Verfahrens ist das Regelventil ein Proportionalventil. Zudem kann dem Regelventil mindestens eine Regel- und Einstellvorrichtung zur manuellen Voreinstellung der relativen Höhe des Ausgleichsmoments zur Regulierung des Aufstelleffekts der Tandemachse angeordnet sein.

In weiteren vorteilhaften Ausgestaltungen des erfindungsgemäßen Verfahrens ist die Ausgleichsvorrichtung eine Drehkolbenzylinderanordnung mit angeschlossenem Planetengetriebe oder eine Zahnstangen-Drehzylinder-Vorrichtung mit angeschlossenem Planetengetriebe oder besteht aus zwei außen liegenden Zylindern, wobei die Zylinder jeweils mit einem Ende an dem Tandemachsengehäuse und mit dem anderen Ende an einem Fahrgestell des Fahrzeugs oder der selbstfahrenden Arbeitsmaschine befestigt sind, jeweils zur Einleitung des Drehmoments des Ausgleicheffekts in die Tandemachse.

Weitere Einzelheiten, Merkmale und Vorteile der Erfindung ergeben sich aus der nachfolgenden Beschreibung eines in den Figuren schematisch dargestellten Ausführungsbeispiels.

Es zeigen
- Figur 1: eine Schnittansicht der erfindungsgemäßen Vorrichtung zur stufenlosen Regulierung des Aufstellens einer Tandemachse eines Fahrzeuges oder einer selbstfahrenden Arbeitsmaschine; und
- Figur 2: eine schematische Darstellung der erfindungsgemäßen Vorrichtung zur stufenlosen Regulierung des Aufstellens einer Tandemachse gemäß Figur 1.

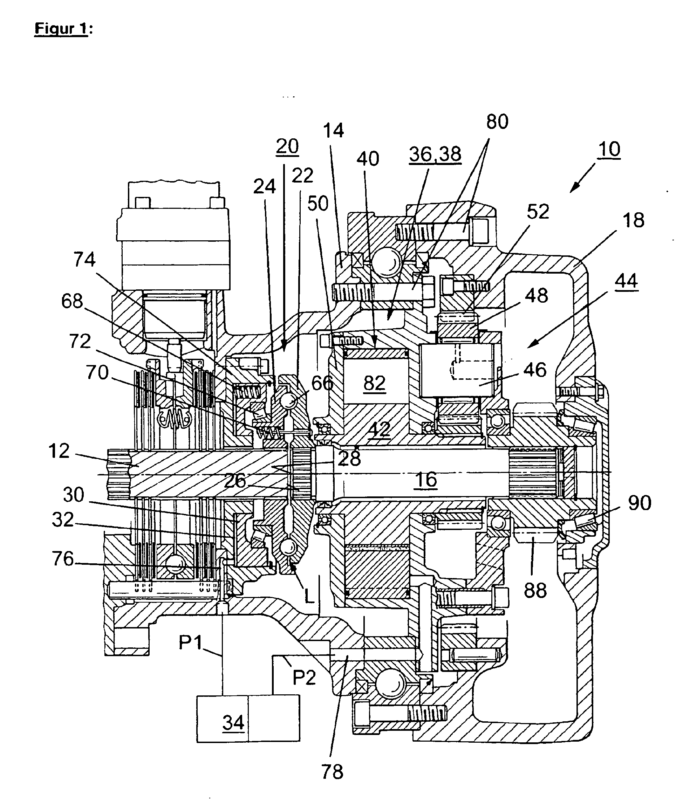

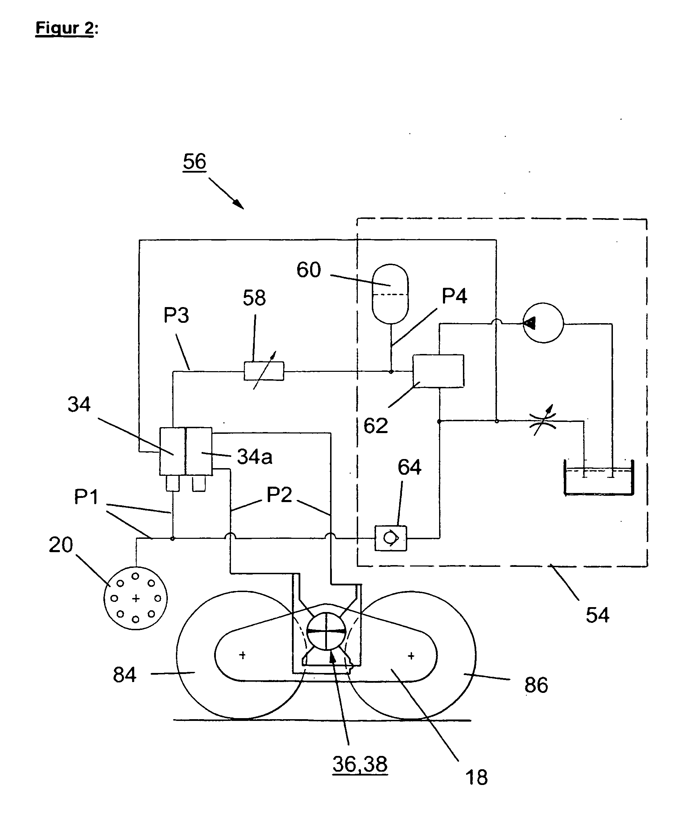

Figur 1 zeigt eine Schnittansicht einer Ausführungsform der Vorrichtung 10 zur stufenlosen Regulierung des Aufstellens einer Tandemachse eines Fahrzeugs oder einer selbstfahrenden Arbeitsmaschine. Das Fahrzeug weist dabei einen Fahrzeugrahmen (nicht dargestellt) auf, an dem ein Achsgehäuse 14 einer Antriebsachse 12 angeordnet ist. An den jeweiligen Enden der Antriebsachse 12 ist jeweils eine Antriebstandemachse 16 mit einem beweglichen Tandemachsengehäuse 18 angeordnet. Über die Antriebstandemachse 16 wird das von der Antriebsachse 12 eingeleitete Moment mechanisch auf die in dem Tandemachsengehäuse angeordneten Räder 84, 86 (siehe Fig. 2) verteilt. Man erkennt, dass die Antriebsachse 12 mit der Antriebstandemachse 16 über eine Kugelrampenvorrichtung 20 koaxial verbunden ist. Die Kugelrampenvorrichtung 20 besteht dabei aus einer ersten Kugelrampenscheibe 22, die mit einem Ende 26 der Antriebstandemachse 16, welches einem Ende 28 der Antriebsachse 12 gegenüberliegt, verbunden ist, und einer zweiten Kugelrampenscheibe 24, die am Ende 28 der Antriebstandemachse axial verschiebbar angeordnet ist. Die einander gegenüberliegenden Flächen der ersten und zweiten Kugelrampenscheibe 22, 24 weisen entsprechende Ausnehmungen zur Aufnahme der Kugeln 66 auf. Die Länge und die Neigung der Ausnehmungen ist dabei individuell ausgestaltbar.

Des weiteren erkennt man aus Fig. 1, dass durch ein dem Antriebsdrehmoment entgegenwirkendes Drehmoment der Antriebstandemachse 16 der Abstand L zwischen der zweiten Kugelrampenscheibe 24 und der ersten Kugelrampenscheibe 22 vergrößert wird, wobei die zweite Kugelrampenscheibe mit einem Kolben 30 in Wirkverbindung steht und durch die Axialbewegung der zweiten Kugelrampenscheibe 24 entlang der Antriebsachse 12 ein Druck mit einem Wert P1 in einem Volumen 32 erzeugt wird. Über eine Bohrung 76 wird der Druck P1 an ein Regelventil 34 weitergeleitet. Das Regelventil 34 regelt die Höhe eines Systemdrucks P3 oder P4 in Abhängigkeit von P1, wobei der resultierende Druck mit dem Wert P2 zur Steuerung einer Ausgleichsvorrichtung 36 zur Erzielung eines dem Aufstelleffekt entgegenwirkenden Ausgleichmoments dient.

Die erste Kugelrampenscheibe 22 stützt sich axial über die Achse 16 und ein Zahnrad 88 und ein Lager 90 am Tandemachsengehäuse 18 ab. Die zweite Kugelrampenscheibe 24 ist einerseits axial entlang der Antriebsachse 12 verschiebbar und über eine Zusammenhaltefeder 70 mit der ersten Kugelrampenscheibe 22 verbunden. Über entsprechende Lager 72 steht die zweite Kugelrampenscheibe 24 mit dem Kolben 30 in Wirkverbindung. Innerhalb des Kolbens 30 ist eine Lastfeder 68 ausgebildet, welche gegenüber einem Kolbengehäuse 74 abgestützt ist und zur Rückbewegung des Kolbens 30 in seine Ausgangslage dient. Zudem sorgt sie für eine axiale Vorspannung des Kugelrollenlagers.

Das Regelventil 34, das in dem dargestellten Ausführungsbeispiel als regelbares Proportionalventil ausgebildet ist, regelt den Druck P2 zur Steuerung der Ausgleichsvorrichtung 36. In dem dargestellten Ausführungsbeispiel besteht die Ausgleichsvorrichtung 36 aus einer Drehkolbenzylinderanordnung 38, wobei das Gehäuse 50 eines mit Druck beaufschlagbaren Drehkolbenzylinders 40 fest mit dem Achsgehäuse 14 der Antriebsachse 12 verbunden ist. Ein drehbeweglicher Kolben 42 des Drehkolbenzylinders 40 treibt ein nachgeschaltetes Planetengetriebe 44 mit einer Planetenachse 46 und Planetenrädern 48 an. Die Planetenachse 46 des Planetengetriebes 44 ist dabei fest mit dem Gehäuse 50 des Drehkolbenzylinders 40 verbunden. Die Planetenräder 48 wirken dagegen auf einen Zahnkranz 52 ein, der mit dem Tandemachsengehäuse 18 verbunden ist. Somit wird das Drehmoment des Drehkolbenzylinders 40 durch das Planetengetriebe 44 verstärkt. Die Drehmomentverstärkung kann dabei in einem Bereich von 1:3 bis 1:5 liegen. Des weiteren erkennt man, dass der mit Druck beaufschlagte Drehkolbenzylinder 40 über eine Druckleitung 78 mit der hydraulischen Anlage des Fahrzeuges bzw. dem Regelventil 34 verbunden ist. Des weiteren erkennt man die Anordnung einer Druckkammer 82 der Drehkolbenzylinderanordnung 38. Das Gehäuse 50 der Drehkolbenzylinderanordnung 38 ist mittels Befestigungsvorrichtungen 80 mit dem Achsgehäuse 14 der Antriebsachse 12 verbunden.

Fig. 2 zeigt eine schematische Darstellung der Vorrichtung 10 gemäß dem in Fig. 1 im Detail dargestellten Ausführungsbeispiels. Man erkennt, dass die Drehkolbenzylinderanordnung 38 bzw. die Ausgleichsvorrichtung 36 mit einem Hydraulikkreislauf 56 einer Hydropumpe 54 des Fahrzeugs oder der selbstfahrenden Arbeitsmaschine verbunden ist. Das Regelventil 34 ist dabei innerhalb des Hydraulikkreislaufs 56 eingebunden. Der von der Kugelrampenanordnung 20 und dem Kolben 30 erzeugte Steuerdruck P1 wird dabei in das Regelventil 34, welches in dem dargestellten Ausführungsbeispiel ein Proportionalventil ist, eingeleitet. In Abhängigkeit von P1 wird der vom Hydrauliksystem gelieferte Druck P3 modifiziert und der resultierende Druck P2 an die Ausgleichsvorrichtung 36 bzw. die Drehkolbenzylinderanordnung 38 weitergeleitet. Die von dem Regelventil 34 ausgehenden Druckleitungen enden dabei jeweils in entsprechenden, sich gegenüberliegenden Druckkammern der Drehkolbenzylinderanordnung 38. Der von der Drehkolbenzylinderanordnung 38 erzeugte Druck ist üblicherweise nicht ausreichend, um mit dem Drehkolbenzylinder ein Drehmoment zu erzeugen, welches ein Aufstellen des Vorder- oder Hinterrads der Tandemachse vollständig verhindert. Das tatsächlich benötigte Drehmoment wird über das in Fig. 1 beschriebene Planetengetriebe 44 und den damit in Wirkverbindung stehenden Zahnkranz 52 erzielt. Über ein Steuerventil 34a wird passend zur jeweiligen Fahrtrichtung der entsprechende Raum des Drehkolbenzylinders beaufschlagt.

Des weiteren erkennt man, dass der Hydraulikkreislauf 56 einen Druckhauptspeicher 60 mit dem Systemdruck P4 umfasst. Der Systemdruck P4 kann dabei mittels einer Regel- und Einstellvorrichtung 58, die zwischen dem Druckhauptspeicher 60 und dem Regelventil 34 angeordnet ist, modifiziert bzw. reguliert werden. Die Regel- und Einstellvorrichtung 58 dient dabei insbesondere zur manuellen Voreinstellung der relativen Höhe des Ausgleichmoments zur Regulierung des Aufstelleffekts der Tandemachse. Des weiteren erkennt man, dass der Hydraulikkreislauf 56 ein Speicherladeventil 62 sowie ein Rückschlagventil 64 aufweist.

## Patentansprüche

1. Vorrichtung zur stufenlosen Regulierung des Aufstellens einer Tandemachse eines Fahrzeuges oder einer selbstfahrenden Arbeitsmaschine, die einen Fahrzeugrahmen und mindestens eine Antriebsachse (12) aufweist, wobei jeweils an den Enden der Antriebsachse (12) eine Antriebstandemachse (16) mit einem beweglichen Tandemachsengehäuse (18) angeordnet ist und über die Antriebstandemachse (16) das von der Antriebsachse (12) eingeleitete Moment mechanisch auf die in dem Tandemachsengehäuse (18) angeordneten Räder verteilt wird,
**dadurch gekennzeichnet,**
**dass** die Antriebsachse (12) mit der Antriebstandemachse (16) über eine Kugelrampenvorrichtung (20) koaxial verbunden ist, wobei die Kugelrampenvorrichtung (20) aus einer ersten Kugelrampenscheibe (22) die mit einem Ende (26) der Antriebstandemachse (16), welches einem Ende (28) der Antriebsachse (12) gegenüberliegt, verbunden ist und einer zweiten Kugelrampenscheibe (24) die am Ende (28) der Antriebstandemachse (12) axial verschiebbar angeordnet ist, besteht und durch ein dem Antriebsdrehmoment entgegenwirkendes Drehmoment der Antriebstandemachse (16) der Abstand L zwischen der zweiten Kugelrampenscheibe (24) und der ersten Kugelrampenscheibe (22) vergrößert wird, wobei die zweite Kugelrampenscheibe (24) mit einem Kolben (30) in Wirkverbindung steht und durch die Axialbewegung der zweiten Kugelrampenscheibe (24) ein Druck mit einem Wert P1 in einem Volumen (32) erzeugt wird, wobei P1 an ein Regelventil (34) geleitet wird und das Regelventil (34) die Höhe eines Systemdrucks P3 oder P4 in Abhängigkeit von P1 regelt und ein resultierender Druck mit dem Wert P2 zur Steuerung einer Ausgleichsvorrichtung (36) zur Erzielung eines dem Aufstelleffekt entgegenwirkenden Ausgleichsmoments dient.

2. Vorrichtung nach Anspruch 1,
**dadurch gekennzeichnet,**
**dass** das Regelventil (34) ein regelbares oder nicht-regelbares Proportionalventil ist.

3. Vorrichtung nach Anspruch 1 oder 2,
**dadurch gekennzeichnet,**
**dass** das Regelventil (34) mit einem Hydraulikkreislauf (56) einer Hydropumpe (54) des Fahrzeuges oder der selbstfahrenden Arbeitsmaschine verbunden ist.

4. Vorrichtung nach Anspruch 3,
**dadurch gekennzeichnet,**
**dass** im Hydraulikkreislauf (56) dem Regelventil (34) mindestens eine Regel- und Einstellvorrichtung (58) zur manuellen Voreinstellung der relativen Höhe des Ausgleichsmoments zur Regulierung des Aufstelleffekts der Tandemachse angeordnet ist.

5. Vorrichtung nach Anspruch 4,
**dadurch gekennzeichnet,**
**dass** die Regel- und Einstellvorrichtung (58) ein Druckminderventil ist.

6. Vorrichtung nach einem der Ansprüche 3 bis 5,
**dadurch gekennzeichnet,**
**dass** der Hydraulikkreislauf (56) einen Druckhauptspeicher (60) mit dem Systemdruck P4 umfasst.

7. Vorrichtung nach Anspruch 6,
**dadurch gekennzeichnet,**
**dass** die Regel- und Einstellvorrichtung (58) zwischen dem Druckhauptspeicher (60) und dem Regelventil (34) angeordnet ist.

8. Vorrichtung nach einem der vorhergehenden Ansprüche,
**dadurch gekennzeichnet,**
**dass** die Ausgleichsvorrichtung (36) eine Drehkolbenzylinderanordnung (38) ist, wobei ein Gehäuse (50) eines mit Druck beaufschlagbaren Drehkolbenzylinders (40) fest mit einem Achsgehäuse (14) der Antriebsachse (12) verbunden ist und ein drehbeweglicher Kolben (42) des Drehkolbenzylinders (40) ein nachgeschaltetes Planetengetriebe (44) mit einer Planetenachse (46) und Planetenrädern (48) antreibt, wobei die Planetenachse (46) des Planetengetriebes (44) fest mit dem Achsgehäuse (14) oder dem Gehäuse (50) des Drehkolbenzylinders (40) verbunden ist und die Planetenräder (48) auf einen Zahnkranz (52), der mit dem Tandemachsengehäuse (18) verbunden ist, einwirken.

9. Vorrichtung nach einem der Ansprüche 1 bis 7,
**dadurch gekennzeichnet,**
**dass** die Ausgleichsvorrichtung (36) eine Zahnstangen-Drehzylinder-Vorrichtung mit angeschlossenem Planetengetriebe zur Einleitung des Drehmoments des Ausgleicheffekts in die Tandemachse ist.

10. Vorrichtung nach einem der Ansprüche 1 bis 7,
**dadurch gekennzeichnet,**
**dass** die Ausgleichsvorrichtung (36) aus zwei außenliegenden Zylindern besteht, wobei die Zylinder jeweils mit einem Ende an dem Tandemachsengehäuse (18) und mit dem anderen Ende an einem Fahrgestell des Fahrzeuges oder der selbstfahrenden Arbeitsmaschine befestigt sind.

11. Verfahren zur Regulierung des Aufstellens einer Tandemachse eines Fahrzeuges oder einer selbstfahrenden Arbeitsmaschine,
**dadurch gekennzeichnet,**
**dass** das Verfahren folgende Schritte umfasst:
a) Einleiten eines Antriebsmoments über eine Antriebsachse (12) und eine koaxiale Antriebstandemachse (16) und Verteilung des eingeleiteten Moments mechanisch auf die in einem Tandemachsengehäuse (18) angeordneten Räder, wobei die Antriebsachse (12) mit der Antriebstandemachse (16) über eine Kugelrampenvorrichtung (20) verbunden ist und die Kugelrampenvorrichtung (20) aus einer ersten Kugelrampenscheibe (22) die mit einem Ende (26) der Antriebstandemachse (16), welches einem Ende (28) der Antriebsachse (12) gegenüberliegt, verbunden ist und einer zweiten Kugelrampenscheibe (24) die am Ende (28) der Antriebstandemachse (12) axial verschiebbar angeordnet ist, besteht;
b) Messen eines dem Antriebsdrehmoment entgegenwirkenden Drehmoments der Antriebstandemachse (16) mittels eines von einem Kolben (30) erzeugten Drucks mit einem Wert P1, wobei der Kolben (30) mit der zweiten Kugelrampenscheibe (24) in Wirkverbindung steht;
c) Weiterleiten des Drucks P1 an ein Regelventil (34); und
d) Regelung der Höhe eines Systemdrucks P3 oder P4 in Abhängigkeit von P1 und Einleitung dieses resultierenden Drucks mit dem Wert P2 in eine Ausgleichsvorrichtung (36) zur Erzielung eines dem Aufstelleffekt entgegenwirkenden Ausgleichsmoments.

12. Verfahren nach Anspruch 11,
**dadurch gekennzeichnet,**
**dass** das Regelventil (34) ein Proportionalventil ist.

13. Verfahren nach Anspruch 11 oder 12,
**dadurch gekennzeichnet,**
**dass** dem Regelventil (34) mindestens eine Regel- und Einstellvorrichtung (58) zur manuellen Voreinstellung der relativen Höhe des Ausgleichsmoments zur Regulierung des Aufstelleffekts der Tandemachse angeordnet ist und durch die Regel- und Einstellvorrichtung (58) der Druck P3 erzeugt wird.

14. Verfahren nach einem der Ansprüche 11 bis 13,
**dadurch gekennzeichnet,**
**dass** die Ausgleichsvorrichtung (36) eine Drehkolbenzylinderanordnung (38) mit angeschlossenem Planetengetriebe oder eine Zahnstangen-Drehzylinder-Vorrichtung mit angeschlossenem Planetengetriebe ist oder aus zwei außenliegenden Zylindern besteht, wobei die Zylinder jeweils mit einem Ende an dem Tandemachsengehäuse (18) und mit dem anderen Ende an einem Fahrgestell des Fahrzeuges oder der selbstfahrenden Arbeitsmaschine befestigt sind, jeweils zur Einleitung des Drehmoments des Ausgleicheffekts in die Tandemachse.

## Claims

1. A device for continuously regulating the erection of a tandem axle of a vehicle or a self-moving working machine having a vehicle frame and at least one drive axle (12), wherein a drive tandem axle (16) having a movable tandem axle housing (18) is respectively disposed at the ends of the drive axle (12), and the torque introduced by the drive axle (12) is mechanically distributed to the wheels disposed in the tandem axle housing (18) via the drive tandem axle (16),
**characterized in that**
said drive axle (12) is coaxially connected to the drive tandem axle (16) via a ball ramp device (20), wherein the ball ramp device (20) is comprised of a first ball ramp disk (22) connected to an end (26) of the drive tandem axle (16) opposing an end (28) of the drive axle (12), and a second ball ramp disk (24) disposed in axially displaceable manner at the end (28) of the drive tandem axle (12), and the distance L between the second ball ramp disk (24) and the first ball ramp disk (22) is increased by a torque of the drive tandem axle (16) counteracting the drive torque, wherein the second ball ramp disk (24) is operatively connected to a piston (30), and a pressure with a value of P1 is produced in a volume (32) by the axial movement of the second ball ramp disk (24), wherein P1 is passed to a control valve (34), and the control valve (34) controls the level of a system pressure P3 or P4 depending on P1, and a resulting pressure with a value of P2 serves for controlling a compensating device (36) for achieving a compensating torque counteracting the erection effect.

2. The device according to claim 1,
**characterized in that**
said control valve (34) is a controllable or non-controllable proportional valve.

3. The device according to claim 1 or 2,
**characterized in that**
said control valve (34) is connected to a hydraulic circuit (56) of a hydraulic pump (54) of the vehicle or the self-moving working machine.

4. The device according to claim 3,
**characterized in that**
in the hydraulic circuit (56) at least one controlling and adjusting device (58) for manually preadjusting the relative magnitude of the compensating torque for regulating the erection effect of the tandem axle is disposed at said control valve (34).

5. The device according to claim 4,
**characterized in that**
said controlling and adjusting device (58) is a pressure-reducing valve.

6. The device according to one of claims 3 to 5,
**characterized in that**
said hydraulic circuit (56) includes a pressure main storage (60) with the system pressure P4.

7. The device according to claim 6,
**characterized in that**
said controlling and adjusting device (58) is disposed between the pressure main storage (60) and said control valve (34).

8. The device according to one of the preceding claims,
**characterized in that**
said compensating device (36) is a rotary piston cylinder assembly (38), wherein a housing (50) of a pressurizable rotary piston cylinder (40) is fixedly connected to an axle housing (14) of said drive axle (12), and a rotationally movable piston (42) of said rotary piston cylinder (40) drives a succeeding planetary gearing (44) having a planetary axle (46) and planet pinions (48), wherein said planetary axle (46) of the planetary gearing (44) is fixedly connected to the axle housing (14) or the housing (50) of the rotary piston cylinder (40), and said planet pinions (48) act on a toothed wheel (52) connected to said tandem axle housing (18).

9. The device according to one of claims 1 to 7,
**characterized in that**
said compensating device (36) is a rack rotary cylinder device with connected planetary gearing for introducing the torque of the compensating effect into the tandem axle.

10. The device according to one of claims 1 to 7,
**characterized in that**
said compensating device (36) is comprised of two external cylinders, wherein the cylinders are each attached with one end to said tandem axle housing (18) and with the other end to a chassis of the vehicle or the self-moving working machine.

11. A method for regulating the erection of a tandem axle of a vehicle or a self-moving working machine,
**characterized in that**
the method comprises the following steps:
a) introducing a drive torque via a drive axle (12) and a coaxial drive tandem axle (16) and mechanically distributing the introduced torque to the wheels disposed in a tandem axle housing (18), wherein said drive axle (12) is connected to said drive tandem axle (16) via a ball ramp device (20), and the ball ramp device (20) is comprised of a first ball ramp disk (22) connected to an end (26) of said drive tandem axle (16) opposing an end (28) of the drive axle (12), and a second ball ramp disk (24) disposed at the end (28) of the drive tandem axle (12) in axially displaceable manner;
b) measuring a torque of the drive tandem axle (16) counteracting the drive torque by means of a pressure with a value of P1 produced by a piston (30), wherein the piston (30) is operatively connected to the second ball ramp disk (24);
c) passing the pressure P1 to a control valve (34); and
d) regulating the level of a system pressure P3 or P4 depending on P1 and introducing this resulting pressure with the value of P2 into a compensating device (36) for achieving a compensating torque counteracting the erection effect.

12. The method according to claim 11,
**characterized in that**
wherein said control valve (34) is a proportional valve.

13. The method according to claim 11 or 12,
**characterized in that**
at least one controlling and adjusting device (58) for manually preadjusting the relative magnitude of the compensating torque for regulating the erection effect of the tandem axle is disposed at the control valve (34), and the pressure P3 is produced by the controlling and adjusting device (58).

14. The method according to one of claims 11 to 13,
**characterized in that**
said compensating device (36) is a rotary piston cylinder assembly (38) with connected planetary gearing or a rack rotary cylinder device with connected planetary gearing or is comprised of two external cylinders, wherein the cylinders are each attached with one end to the tandem axle housing (18) and with the other end to a chassis of the vehicle or the self-moving working machine, each for introducing the torque of the compensating effect into the tandem axle.

## Revendications

1. Dispositif de régulation continue du positionnement d'un essieu tandem d'un véhicule ou d'une machine automotrice, qui présente au moins un châssis de véhicule et au moins un essieu d'entraînement (12), aux extrémités de l'essieu d'entraînement (12) étant chaque fois disposé un essieu de tandem d'entraînement (16) avec un carter mobile d'essieu de tandem (18) et le couple induit de l'essieu d'entraînement (12) par l'essieu de tandem d'entraînement (16) étant réparti mécaniquement entre les pignons disposés dans le carter d'essieu de tandem (18),
**caractérisé en ce que**
l'essieu d'entraînement (12) est relié de façon coaxiale à l'essieu de tandem d'entraînement (16) au moyen d'un dispositif d'embrayage à billes (20), le dispositif d'embrayage à billes (20) se constituant d'un premier plateau d'embrayage à billes (22) relié à une extrémité (26) de l'essieu de tandem d'entraînement (16) figurant en face d'une extrémité (28) de l'essieu d'entraînement (12) et un deuxième plateau d'embrayage à billes (24) disposé à l'extrémité (28) de l'essieu d'entraînement (12) de manière à pouvoir coulisser, et l'écartement L entre le deuxième plateau d'embrayage à billes (24) et le premier plateau d'embrayage à billes (22) étant augmenté par un couple de rotation de sens contraire au couple de rotation d'entraînement de l'essieu de tandem d'entraînement (16), le deuxième plateau d'embrayage à billes (24) étant activement relié avec un piston (30) et, par le déplacement axial du deuxième plateau d'embrayage à billes (24), une pression d'une valeur P1 étant créée dans un volume (32), P1 étant appliqué à une soupape de régulation (34) et la soupape de régulation (34) régulant l'ampleur d'une pression système P3 ou P4 en fonction de P1 et une pression résultante de valeur P2 servant au pilotage d'un dispositif d'équilibrage (36) pour obtenir un couple d'équilibrage de sens contraire à l'effet de positionnement.

2. Dispositif selon la revendication 1,
**caractérisé en ce que**
la soupape de régulation (34) est une soupape proportionnelle régulable ou non régulable.

3. Dispositif selon la revendication 1 ou 2,
**caractérisé en ce que**
la soupape de régulation (34) est reliée à un circuit hydraulique (56) d'une pompe hydraulique (54) du véhicule ou de la machine automotrice.

4. Dispositif selon la revendication 3,
**caractérisé en ce que**
dans le circuit hydraulique (56), au moins un dispositif de régulation et de réglage (58) pour le préréglage manuel de l'ampleur relative du couple d'équilibrage pour la régulation de l'effet de positionnement de l'essieu de tandem est disposé à la soupape de régulation (34).

5. Dispositif selon la revendication 4,
**caractérisé en ce que**
le dispositif de régulation et de réglage (58) est une soupape de détente de pression.

6. Dispositif selon l'une quelconque des revendications 3 à 5,
**caractérisé en ce que**
le circuit hydraulique (56) comprend une réserve principale de pression (60) de pression système P4.

7. Dispositif selon la revendication 6,
**caractérisé en ce que**
le dispositif de régulation et de réglage (58) est disposé entre la réserve principale de pression (60) et la soupape de régulation (34).

8. Dispositif selon l'une quelconque des revendications précédentes
**caractérisé en ce que**
le dispositif d'équilibrage (36) est un dispositif à cylindre de piston rotatif (38), un carter (50) d'un cylindre de piston rotatif (40) subissant une pression étant relié de façon fixe avec un carter d'essieu (14) de l'essieu d'entraînement (12) et un piston pouvant pivoter (42) du cylindre de piston rotatif (40) entraînant une transmission à planétaire (44) en aval avec un essieu planétaire (46) et des pignons planétaires (48), l'essieu planétaire (46) de la transmission à planétaire (44) étant relié de façon fixe au carter d'essieu (14) ou au carter (50) du cylindre de piston rotatif (40) et les pignons planétaires (48) agissant sur une couronne dentée (52) qui est reliée au carter d'essieu de tandem (18).

9. Dispositif selon l'une quelconque des revendications 1 à 7,
**caractérisé en ce que**
le dispositif d'équilibrage (36) est un dispositif cylindre rotatif - barre dentée avec une transmission à planétaire raccordée pour induire le couple de l'effet d'équilibrage dans l'essieu tandem.

10. Dispositif selon l'une quelconque des revendications 1 à 7,
**caractérisé en ce que**
le dispositif d'équilibrage (36) se constitue de deux cylindres extérieurs, les cylindres étant chaque fois fixés par une extrémité au carter d'essieu de tandem (18) et par l'autre extrémité à un châssis du véhicule ou de la machine automotrice.

11. Procédé de régulation continue du positionnement d'un essieu tandem d'un véhicule ou d'une machine automotrice,
**caractérisé en ce que**
le procédé comprend les étapes suivantes :
a) induction d'un couple d'entraînement par un essieu d'entraînement (12) et un essieu de tandem d'entraînement (16) et répartition mécanique du couple induit entre les pignons disposés dans un carter d'essieu de tandem (18), l'essieu d'entraînement (12) étant relié à l'essieu de tandem d'entraînement (16) au moyen d'un dispositif d'embrayage à billes (20) et le dispositif d'embrayage à billes (20) se constituant d'un premier plateau d'embrayage à billes (22) relié à une extrémité (26) de l'essieu de tandem d'entraînement (16) figurant en face d'une extrémité (28) de l'essieu d'entraînement (12) et un deuxième plateau d'embrayage à billes (24) étant disposé à l'extrémité (28) de l'essieu d'entraînement (12) de manière à pouvoir coulisser ;
b) mesure d'un couple de l'essieu de tandem d'entraînement (16) de sens contraire au couple d'entraînement au moyen d'une pression de valeur P1 créée par le piston (30), le piston (30) étant relié activement avec le deuxième plateau d'embrayage à billes (24) ;
c) transmission de la pression P1 à une soupape de régulation (34) ; et
d) régulation de l'ampleur d'une pression système P3 ou P4 en fonction de P1 et induction de cette pression résultante de valeur P2 dans un dispositif d'équilibrage (36) pour obtenir un couple d'équilibrage de sens contraire à l'effet de positionnement.

12. Procédé selon la revendication 11,
**caractérisé en ce que**
la soupape de régulation (34) est une soupape proportionnelle.

13. Procédé selon la revendication 11 ou 12,
**caractérisé en ce que**
au moins un dispositif de régulation et de réglage (58) pour le préréglage manuel de l'ampleur relative du couple d'équilibrage pour la régulation de l'effet de positionnement de l'essieu de tandem est disposé à la soupape de régulation (34) et que la pression P3 est créée par le dispositif de régulation et de réglage (58).

14. Procédé selon l'une quelconque des revendications 11 à 13,
**caractérisé en ce que**
le dispositif d'équilibrage (36) est un dispositif à cylindre de piston rotatif (38) avec transmission à planétaire raccordée ou un dispositif cylindre rotatif - barre dentée avec transmission à planétaire raccordée ou se constitue de deux cylindres extérieurs, les cylindres étant chaque fois fixés par une extrémité au carter d'essieu de tandem (18) et par l'autre extrémité à un châssis du véhicule ou de la machine automotrice, pour induire chaque fois le couple de l'effet d'équilibrage dans l'essieu de tandem.
